# EUROPÄISCHE PATENTANMELDUNG

(11) **EP 0 757 199 A1**
(43) Veröffentlichungstag der Anmeldung: **05.02.1997**
(21) Anmeldenummer: 95112017.9
(22) Anmeldetag: 31.07.1995
(51) Int. Cl.: F16K 11/078, F16K 11/07

(54) **Handbrause mit integriertem Handsteuergerät für Badeliftern für Behinderte**

(71) Anmelder: Schmidt & Lenhardt GmbH & Co. oHG, D-88316 Isny (DE)
(72) Erfinder: Janisch, Klaus, D-88316 Isny (DE)
(74) Vertreter: Hübner, Hans-Joachim, Dipl.-Ing.

(57) **Zusammenfassung**

Eine Handbrause (40) mit Brausekopf (44) enthält einen um eine Querachse (66) verschwenkbaren Hebel (64), mit dem ein Ventilschieber (50) aus einer Neutralstellung in entgegengesetzten Richtungen verschoben werden kann. Die Handbrause (40) ist an eine Anzahl Schlauchleitungen (78) angeschlossen, die einen Druckwasser-Versorgungsschlauch, eine Rückführleitung und zwei Steuerleitungen umfassen. Durch Verschwenken des Handbetätigungsorgans (74) wird jeweils eine Steuerleitung mit der Druckwasser-Versorgungsleitung verbunden, die ein Arbeitsventil öffnet, um eine Hubplatte des Badelifters zu heben bzw. zu senken. Durch Drehen des Handbetätigungsorgan (74) um eine lotrechte Achse (70) wird der Ventilschieber (50) um etwa 90° um seine Längsachse gedreht, wodurch dieser einen zum Brausekopf (44) führenden Wasserkanal (84) mit der Druckwasser-Versorgungsleitung (80) verbindet. Die Handbrause (40) dient somit als Fernsteuergerät für das Heben und Senken der Hubplatte eines Badelifters und hat ein eigenes Umschaltorgan, um den Brausebetrieb zu aktivieren.

## Beschreibung

Die Erfindung betrifft eine Handbrause zum Einsatz bei Badeliftern für Behinderte, die eine, von einem Führungsgestell geführte und mittels eines Hubschlauches durch Druckwasserzufuhr heb- und senkbare Hubplatte aufweisen, an der bodenseitig eine hydraulisch steuerbare Ventileinrichtung angeordnet ist, die von einem durch ein Schlauchbündel angeschlossenen Handsteuergerät ansteuerbar ist.

Badelifter dieser Art sind aus der EP-A-0619106 bekannt. Bei diesem bekannten Gerät handelt es sich um einen Vorläufer des Patentgegenstandes. Das Handsteuergerät sollte in der Lage sein, sowohl das Auf- und Abwärtsfahren der Hubplatte als auch eine Rückenlehnenverstellung zu steuern. Entsprechend komplizert war der Aufbau des vorveröffentlichten Handsteuerventils. Da solche Badelifter üblicherweise anstelle des Brauseanschlusses der Badewannenarmatur angeschlossen werden, war die Handbrause nicht mehr einsetzbar.

Aufgabe der Erfindung ist es, eine Einrichtung zu schaffen, die es ermöglicht, den Badelifter in bekannter Weise durch eine Fernsteuerung auf- und abwärts fahren zu lassen, gleichwohl aber die Möglichkeit für den Behinderten zu eröffnen, eine Handbrause benutzen zu können, ohne daß ein erheblicher technischer Mehraufwand in Kauf genommen werden müßte.

Diese Aufgabe wird erfindungsgemäß dadurch gelöst, daß das Handsteuergerät in der Handbrause integriert ist, die über das Bündel Schlauchleitungen an die Ventileinrichtung angeschlossen ist und ein, aus einer Neutralstellung in entgegengesetzten Richtungen in jeweils eine Funktionsstellung bewegbares Handbetätigungsorgan aufweist, und daß die Handbrause ein handbetätigbares Absperrventil für das Brausewasser aufweist.

Eine denkbare Alternative zu der vorliegenden Erfindung läge darin, an der Hubplatte einen Anschluß für eine Handbrause vorzusehen. Der Nachteil wäre aber der, daß zwei Schlauchleitungen von dem Badelifter ausgingen, nämlich diejenige für das Handsteuergerät und diejenige für die Handbrause und es müßte dann ein Absperrventil z.B. an der Hubplatte des Badelifters vorgesehen werden, um die Handbrause aktivieren zu können. Demgegenüber bringt die Erfindung den Vorteil, daß nur ein einziger Schlauch mit einem Bündel von Schlauchleitungen zu einem Terminal führt, das zwei unterschiedliche Funktionen hat, nämlich einmal die Auf- und Abbewegung der Hubplatte steuert und zum anderen dank der Ausbildung des Terminals als Handbrause auch den Brausebetrieb ermöglicht.

Gemäß einer Ausführungsform der Erfindung weist das Absperrventil für das Brausewasser in der Handbrause ein eigenes handbetätigbares Umschaltorgan auf. Bei einer alternativen Ausführungsform gemäß der Erfindung ist das Umschaltorgan für die Handbrause in einen Ventilschieber, der vom Handbetätigungsorgan gesteuert wird integriert, sodaß das Handbetätigungsorgan in einer Ebene hin- und herbewegt werden kann, um die Auf- und Abwärtsbewegung der Hubplatte zu steuern und mindestens in einer dritten Bewegungsrichtung bewegt werden kann, um das Brausewasser-Absperrventil zu öffnen.

Eine besonders bevorzugte Ausführungsform verwendet einen, im Handgriff der Handbrause längsverschiebbaren Ventilschieber, der zusätzlich um seine Längsachse drehbar gelagert ist, wobei das Betätigungsorgan derart mit dem Ventilschieber verbunden ist, daß es bei seiner Bewegung in einer Ebene den Ventilschieber verschiebt und bei Drehung des Betätigungsorgans um eine, in dessen Neutralstellung rechtwinklig zur Längsachse des Ventilschiebers liegende Achse den Ventilschieber um einen bestimmten Drehwinkel verdreht. Durch diese Verdrehung des Ventilschiebers wird der Druckwasser-Versorgungsanschluß der Handbrause mit dem Auslaß des Brausekopfes verbunden, sodaß ein Brausebetrieb möglich ist.

Anhand der Zeichnung, die Ausführungsbeispiele der Erfindung zeigt, wird diese näher erläutert.

Es zeigt:

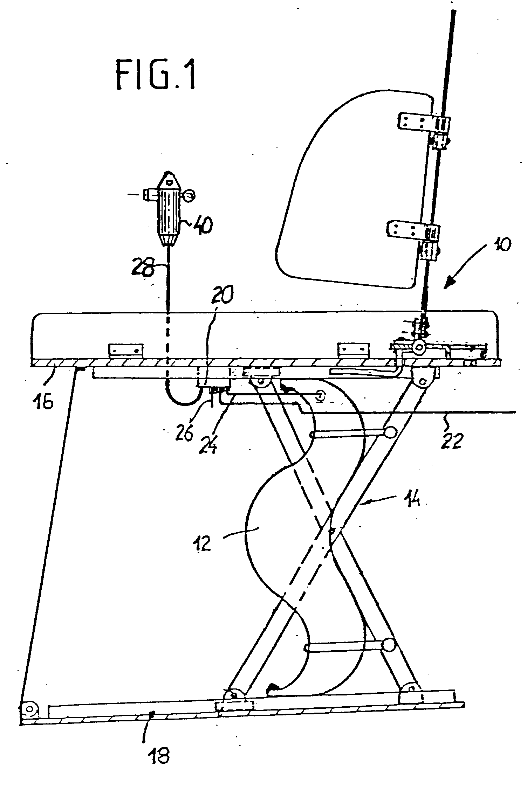

- FIG. 1: eine schematische Seitenansicht eines Badelifters für Behinderte mit einer Handbrause, die mehrere Steuerfunktionen hat,
- FIG. 2: einen Längsschnitt durch eine Handbrause zum Anschluß an eine Ventileinrichtung des Badelifters gemäß FIG. 1,

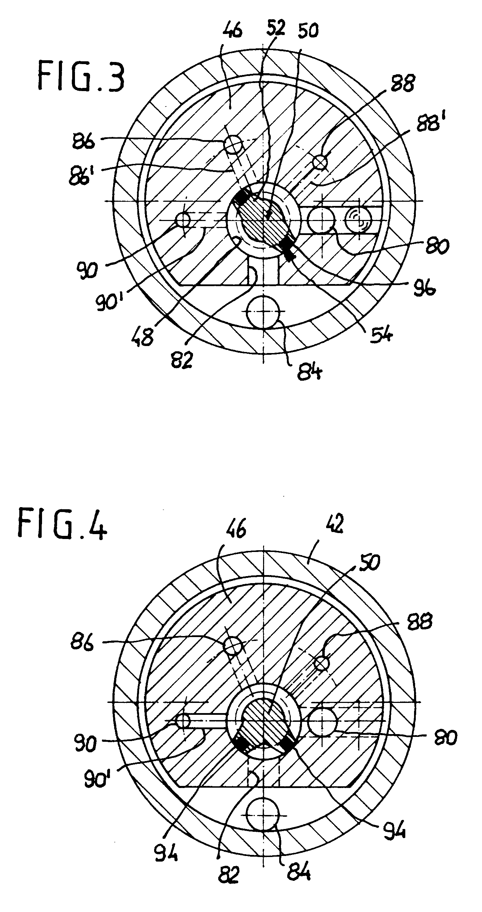

- FIG. 3: eine Schnittansicht längs der Linie 3-3 der Figur 2,
- FIG. 4: eine Schnittansicht längs der Linie 4-4 der Figur 2,
- FIG. 5: eine Seitenansicht einer Korbdichtung, die für den Ventilschieber bei der Handbrause gemäß FIG. 2 verwendet wird,
- FIG. 6: eine Schnittansicht längs der Linie 6-6 der Korbdichtung nach Figur 5,
- FIG. 7: eine Schnittansicht längs der Linie 7-7 und der Linie 7'-7' der Figur 5,
- FIG. 8: eine Längsschnittansicht durch eine Handbrause mit einem abgewandelten Umschaltorgan für den Brausebetrieb,
- FIG. 9: eine Querschnittansicht durch den Brausekopf längs der Linie 9-9 der Figur 8, und
- FIG. 10: eine Schnittansicht durch die Handbrause längs der Linie 10-10 der Figur 8.

Die Hubplatte 16 eines Badelifters 10 wird von einem Führungsgestell 14 für eine Auf- und Abwärtsbewegung geführt und von einem mit Druckwasser füllbaren Hubschlauch 12 betätigt, der endseitig an der Hubplatte 16 und einem Bodengestell 18 befestigt ist. Unter der Hubplatte 16 sitzt eine, mit zwei hydraulisch betätigbaren Arbeitsventilen bestückte Ventileinrichtung 20, in die eine Druckwasser-Versorgungsleitung 22 mündet. Ein Verbindungsschlauch 24 schließt den Hubschlauch 12 an die Ventileinrichtung 20 an. Mit 26 ist eine Entleerungsleitung angedeutet. Ein Verbindungsschlauch 28 enthält ein Bündel Schlauchleitungen, die an die Ventileinrichtung 20 angeschlossen sind und mit einer Handbrause 40 verbunden sind. Die Handbrause hat eine Servoventileinrichtung, die die Arbeitsventile in der Ventileinrichtung 20 für das Heben und Senken der Hubplatte 16 ansteuern.

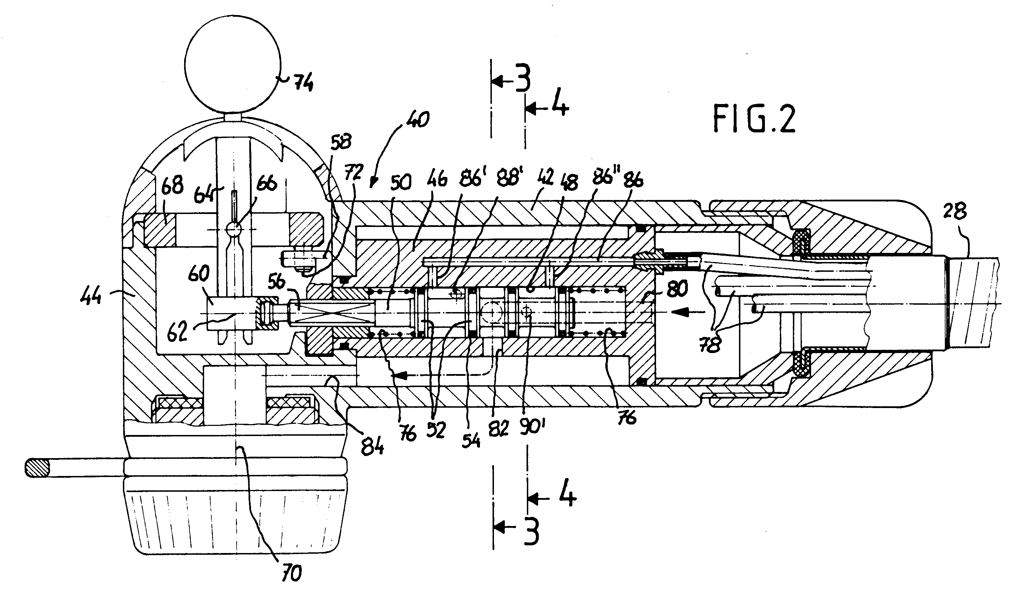

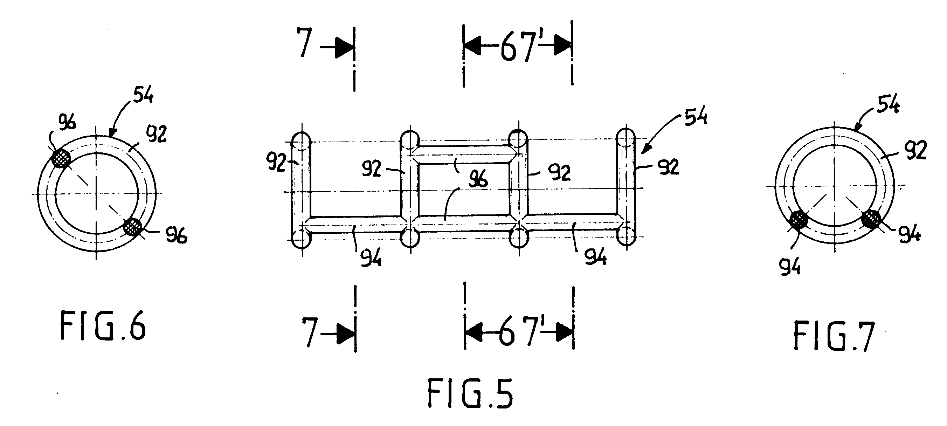

Die Handbrause 40 weist einen hohlen Handgriff 42 auf, der sich einstückig in einem Brausekopf 44 fortsetzt. Im Handgriff 42 befindet sich ein Einsatzkörper 46, in dem eine Zentralbohrung 48 ausgebildet ist, die einen Ventilschieber 50 enthält. Dieser hat vier axial beabstandete Kolben 52, die eine Korbdichtung 54 lagern, die im einzelnen in den Figuren 5-7 dargestellt ist. Jeweils zwei benachbarte Ringkolben 52 sind durch ein Paar in Winkelabständen angeordnete axiale Kolbenstege miteinander verbunden. Der Vierkantschieber 50 endet in einem Vierkantprofilabschnitt 56 und durchsetzt damit ein entsprechendes Vierkantloch in einem Schwenkarm 58, der im Brausekopf 44 unverschiebbar, jedoch um die Achse des Ventilschiebers 50 zusammen mit diesem schwenkbar gelagert ist. Das linke Ende des Ventilschiebers 50 ist in einer Gabel 60 drehbar gehaltert, die einen Bolzen aufweist, dessen Achse bei 62 dargestellt ist. Dieser Bolzen 62 durchsetzt ein gabelartiges Ende einer zum Brausekopf 44 koaxialen und damit rechtwinklig zur Achse des Ventilschiebers 50 stehenden Stange 64, die um einen Querbolzen 66 schwenkbar gelagert ist, welcher seinerseits in einem Drehkörper 68 gehaltert ist, der wiederum im Brausekopf 44 um die Brausekopfachse 70 drehbar gelagert ist. Am äußeren Umfang des Drehkörpers 68 ist ein abwärts weisender Mitnehmer 72 befestigt, der in einem gabelartigen Fortsatz des Schwenkarmes 58 eingreift. Die Stange 64 ragt durch einen deckseitigen Schlitz des Brausekopfes 44 nach außen und trägt einen Handgriff 74. Dieser kann somit in einer die Achse des Ventilschiebers 50 und die Achse 70 des Brausekopfes 44 enthaltenden Ebene aus der in FIG. 2 gezeigten Neutralstellung in entgegengesetzten Richtung in Funktionsstellungen geschwenkt werden, wobei der Ventilschieber 50 jeweils nach links oder rechts aus dessen Neutralstellung verschoben wird.

Auf dem Ventilschieber 50 wirken zwei Druckfedern 76, die ihn in seine Neutralstellung vorspannen, sodaß dieser selbsttätig in seine Neutralstellung zurückgeschoben wird, wenn der Handgriff 74 in einer seiner verschwenkten Funktionsstellungen freigegeben wird.

Der Einsatzkörper weist eine Anzahl Längsbohrungen auf, die an der rechtseitigen radialen Endfläche des Einsatzkörpers 46 münden. In diesen Mündungen sitzen Anschlußnippel von Schlauchleitungen 78, die in der Verbindungsleitung 28 aufgenommen sind. Die Schlauchleitungen 78 bestehen aus dünnen Schläuchen, während eine größer dimensionierte Schlauchleitung oder der innerhalb der Verbindungsleitung 28 und außerhalb der Schlauchleitungen 78 gebildete Raum der Druckwasserversorgung dient. Der Druckwasser-Versorgungsschlauch oder dieser genannte Raum in der Verbindungsleitung 28 ist an eine Versorgungsbohrung 80 angeschlossen, die über eine Querbohrung zwischen den beiden inneren Kolben 52 in der Zentralbohrung 48 mündet, wenn sich der Ventilschieber 50 in seiner Neutralstellung befindet. Rechtwinklig zu dieser Querbohrung und axial mit dieser ausgerichtet, mündet in einem Umfangsabstand von 90° zu dieser eine lotrechte Bohrung 82, die mit einem Längskanal 84 kommuniziert, der unmittelbar zum Auslaßende des Brausekopfes 44 führt.

Als weitere Längsbohrungen außer der Versorgungsbohrung 80 weist der Einsatzkörper 46 eine Rücklaufbohrung 86 und zwei Steuerbohrungen 88, 90 auf, die über Querbohrungen 88' und 90' in der Zentralbohrung 48 dicht benachbart der jeweiligen inneren Kolben 52 münden. Die Rücklaufbohrung 86 weist zwei Querbohrungen 86' und 86'' auf, die jeweils dicht benachbart der beiden äußeren Kolben 52 münden. Die Querbohrungen 86', 88' einerseits und die Querbohrungen 86'' und 90' andererseits sind in der Neutralstellung des Ventilschiebers 50 durch zwischen jeweils zwei Kolben 52 gebildete Ringkammern miteinander verbunden.

Jeweils zwei benachbarte ringförmige Kolben 52 sind durch ein Paar axialer Kolbenstege miteinander verbunden. In den ringförmigen Kolben 52 befinden sich O-Ringe 92 und in den axialen Kolbenstegen befinden sich axiale Dichtungsstege 94, 96. Die O-Ringe 92 und die Dichtungsstege 94, 96 bilden die in den Figuren 5 bis 7 veranschaulichte einstückige Korbdichtung 54.

Die beiden Dichtungsstege 96 liegen einander diametral gegenüber und dichten die Querbohrung 82 gegenüber der Druckwasser-Versorgungsbohrung 80 ab.

Wird das Handbetätigungsorgan 74 in eine seiner Funktionsstellungen geschwenkt, so wird jeweils eine der beiden Steuerleitungen 88, 90 mit der Druckwasser-Versorgungsbohrung 80 verbunden, während gleichzeitig die entsprechende Querbohrung 86' bzw. 86'' vom jeweiligen äußeren Kolben 52 abgesperrt wird. Die Steuerleitung erhält also Druckwasser und betätigt das Arbeitsventil in der lifterseitigen Ventileinrichtung 20. Die jeweils andere Steuerleitung bleibt mit der Rücklaufleitung 86 verbunden.

Wird nun das Handbetätigungsorgan 74 um die Achse 70 gedreht, so verschwenkt der Mitnehmer 72 den Schwenkarm 58 und damit den Ventilschieber 50 etwa um 90°, wodurch in der Neutralstellung des Ventilschiebers 50 die großflächig ausgebildete Querbohrung 82 für das Brausewasser mit der Druckwasserbohrung 80 gleichen Querschnittes kommuniziert, sodaß Brausewasser aus dem Kopf der Handbrause 40 austritt. Da die beiden Dichtungsstege 94 zwischen jeweils einem äußeren O-Ring 92 und dem benachbarten inneren O-Ring 92 einen Umfangswinkel von etwa 90° bilden und in einer der beiden Funktionsstellungen des Ventilschiebers 50 beidseitig der Querbohrung 82 für das Brausewasser liegen, kann während des Auf- und Abfahrens der Hubplatte 16 kein Brausewasser aus dem Kopf 44 der Handbrause 40 austreten. Wird in dieser Funktionsstellung das Handbetätigungsorgan 74 gedreht, so dreht sich der Ventilschieber 50 im Uhrzeigergegendrehsinn und sperrt die entsprechende Steuerleitung gegenüber der Versorgungsbohrung 80 ab, denn der Brausebetrieb sollte während der Heb- und Senkbewegung der Hubplatte 16 gesperrt bleiben, um den Behinderten nicht zu erschrecken. Allerdings wird auch die Bewegung der Hubplatte 16 gestoppt.

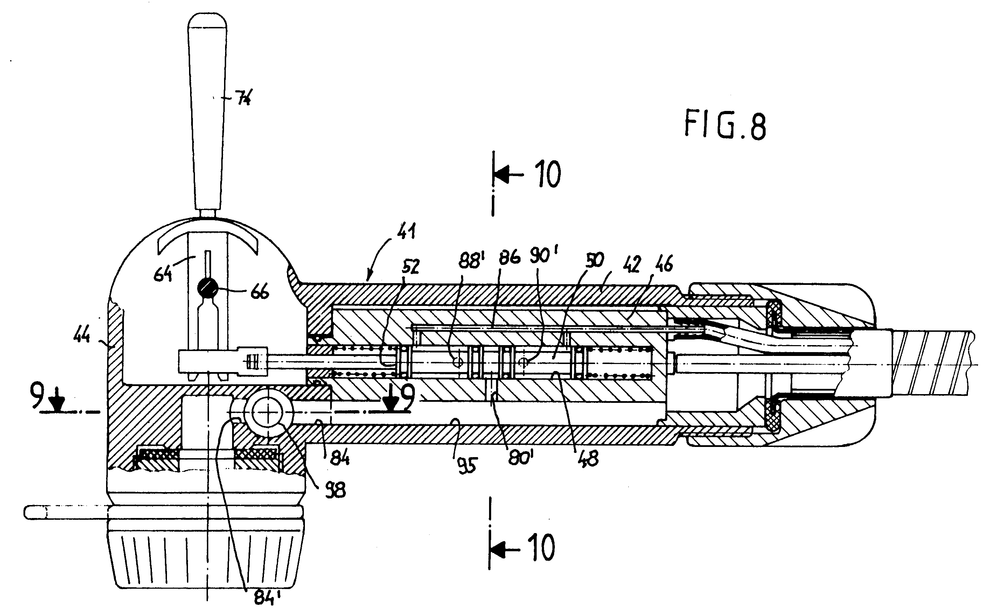

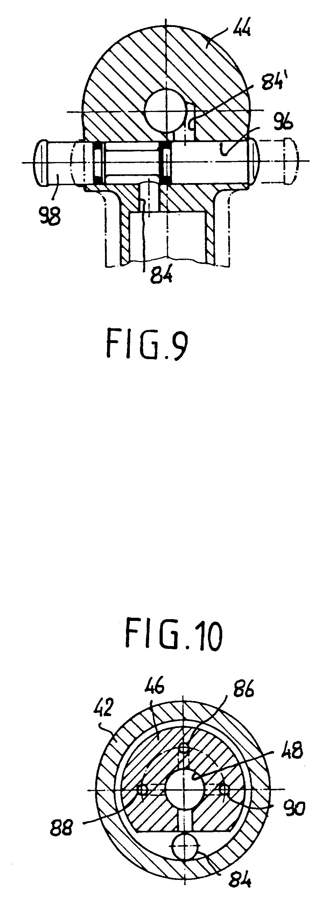

Die Figuren 8 bis 10 zeigen eine weitere Ausführungsform einer Handbrause 41, die sich von der vorbeschriebenen Handbrause 40 hauptsächlich dadurch unterscheidet, daß der Ventilschieber 50 lediglich längsverschiebbar aber nicht drehbar gelagert ist. Ebenso ist die Betätigungsstange 64 mit Handgriff 74 lediglich um die Querachse 66 schwenkbar aber nicht drehbar gelagert. Durch Verschwenken des Handbetätigungsorgans 74 aus der Neutralstellung in eine seiner beiden Funktionsstellungen wird also der Ventilschieber 50 in eine seiner Funktionsstellungen verschoben, um die jeweilige Steuerleitung 88' bzw. 90' mit der Druckwasserleitung 80 zu verbinden. Diese unterscheidet sich von der vorbeschriebenen Ausführungsform dadurch, daß der Innenraum des Außenschlauches der Verbindungsleitung 28 mit einem bodenseitigen Längskanal 95 zwischen dem Einsatzkörper und dem Handgriff 42 verbunden ist, der also ständig unter Druck steht und von dem eine aufwärts weisende Querbohrung 80' abzweigt, die in der Zentralbohrung mündet. Der Längskanal 95 mündet in einer Längsbohrung 84 des Brausekopfes 44, die ihrerseits in einer Querbohrung 96 mündet, in welcher ein Querschieber 98 aufgenommen ist. Ein zur Bohrung 84 quer versetzter Bohrungsabschnitt 84' verbindet die Querbohrung 96 mit dem Auslaßsystem des Brausekopfes 44. In der in FIG. 9 gezeigten Stellung des Querschiebers 98 ragt dieser linksseitig aus dem Brausekopf 44 heraus. Wird er nach rechts verschoben, so werden die Bohrungen 84, 84' durch die zwischen den beiden in Figur 9 dargestellten Ringdichtungen gebildete Ringkammer verbunden, sodaß das Brausewasser austreten kann.

## Patentansprüche

1. Handbrause zum Einsatz bei Badeliftern für Behinderte, die eine, von einem Führungsgestell (14) geführte und mittels eines Hubschlauches durch Druckwasserzufuhr- und Entleerung heb- und senkbare Hubplatte (16) aufweisen, an der bodenseitig eine hydraulisch steuerbare Ventileinrichtung (20) angeordnet ist, die von einem, durch eine, ein Schlauchbündel enthaltende Verbindungsleitung (28) angeschlossenen Handsteuergerät ansteuerbar ist, **dadurch gekennzeichnet, daß** das Handsteuergerät in der Handbrause (40, 41) integriert ist, die über das Bündel Schlauchleitungen (78) an die Ventileinrichtung (20) angeschlossen ist und ein, aus einer Neutralstellung in entgegengesetzten Richtungen in jeweils eine Funktionsstellung bewegbares Handbetätigungsorgan (74) aufweist, und daß die Handbrause (40, 41) ein handbetätigbares Absperrventil (50, 96) aufweist.

2. Handbrause nach Anspruch 1, **dadurch gekennzeichnet, daß** sie einen hohen länglichen Handgriff (42) mit an dessen einem Ende angeschlossenen Brausekopf (44) aufweist, daß im Handgriff ein Einsatzkörper (46) befestigt ist, in dem eine Zentralbohrung (48) vorgesehen ist, in die ein Druckwasser-Versorgungskanal (80, 80'), ein Rücklaufkanal (86) sowie zwei Steuerkanäle (88, 90) münden, daß in der Zentralbohrung (48) ein Ventilschieber (50) beweglich geführt ist, der mechanisch mit dem Handbetätigungsorgan (74) verbunden ist, und daß die Kanäle (80, 86, 88, 90) an dem vom Brausekopf (44) abgewandten Ende des Handgriffes (42) jeweils mit dem Innenraum eines Schlauches (78, 28) in der Verbindungsleitung verbunden sind und alle Schläuche (78, 28) axial aus dem Handgriff (42) herausgeführt sind.

3. Handbrause nach Anspruch 1 oder 2, **dadurch gekennzeichnet, daß** der Brausekopf (44) einen bodenseitigen Brausewasserauslaß aufweist und das Handbetätigungsorgan (74) am Brausekopf (44) deckseitig vorgesehen ist.

4. Handbrause nach einem der Ansprüche 1 bis 3, **dadurch gekennzeichnet, daß** der Ventilschieber (50) im Handgriff (42) in Längsrichtung des Handgriffes (42) zwischen zwei Funktionsstellungen und einer dazwischen liegenden Neutralstellung verschiebbar geführt und mittels zweier Federn (76) in die Neutralstellung vorbelastet ist.

5. Handbrause nach einem der Ansprüche 1 bis 4, **dadurch gekennzeichnet, daß** eine der Schlauchleitungen (78, 28) der Verbindungsleitung ständig an die Wasserversorgung der Ventileinrichtung (20) angeschlossen ist und daß an diese eine Schlauchleitung sowohl das Handbetätigungsorgan (74) als auch das Umschaltorgan (74, 96) angeschlossen sind.

6. Handbrause nach einem der Ansprüche 1 bis 5, **dadurch gekennzeichnet, daß** das Handbetätigungsorgan (74) in einer Ebene hin- und herbeweglich gelagert ist und mindestens in einer dritten Bewegungsrichtung beweglich ist, in welcher das Brausewasser-Absperrventil (94) geöffnet wird.

7. Handbrause nach Anspruch 6, **dadurch gekennzeichnet, daß** der Ventilschieber (50) im Einsatzkörper (46) drehbar gelagert ist und mit einem Schwenkarm relativ längsverschiebbar jedoch drehfest gekuppelt ist, daß das Handbetätigungsorgan (74) an einer sich in der Neutralstellung rechtwinklig zum Ventilschieber (50) erstreckenden Stange (64) befestigt ist, die an einem koaxialen Drehkörper (68) gelagert ist, der seinerseits im Brausekopf (44) drehbar gelagert ist und an seinem Außenumfang einen Mitnehmer (56) für den Schwenkarm (58) aufweist.

8. Handbrause nach einem der Ansprüche 1 bis 7, **dadurch gekennzeichnet, daß** das Handbetätigungsorgan (74) an einer sich in der Neutralstellung rechtwinklig zum Ventilschieber (50) erstreckenden und um eine Querachse (66) des Brausekopfes (44) verschwenkbaren Stange (64) befestigt ist, deren vom Handbetätigungsorgan (74) abgewandtes Ende eine Gelenkverbindung (60, 62) mit dem Ventilschieber (50) aufweist.

9. Handbrause nach einem der Ansprüche 6 bis 8, **dadurch gekennzeichnet, daß** zwischen dem Ventilschieber (50) und der Zentralbohrung (48) des Einsatzkörpers (46) eine einstückige Korbdichtung (54) angeordnet ist, die eine Anzahl O-Ringe (92) und diese jeweils miteinander verbindende Axialstegpaare (94, 96) aufweist, wobei die Axialstege (94, 94) eines Axialstegpaares andere Umfangsabstände aufweisen als die mindestens eines benachbarten Axialstegpaares (96, 96).

10. Handbrause nach einem der Ansprüche 1 bis 5, **dadurch gekennzeichnet, daß** das Absperrventil ein eigenes handbetätigbares Umschaltorgan (98) aufweist.
